(19) Europäisches Patentamt / European Patent Office / Office européen des brevets

(11) **EP 4 057 190 A1**

(12) **DEMANDE DE BREVET EUROPEEN**

(43) Date de publication:
**14.09.2022 Bulletin 2022/37**

(21) Numéro de dépôt: **21305294.7**

(22) Date de dépôt: **10.03.2021**

(51) Classification Internationale des Brevets (IPC):
*G06N 10/00* (2022.01)   *H04L 9/08* (2006.01)

(52) Classification Coopérative des Brevets (CPC):
**G06N 10/20; G06N 10/40; G06N 10/80; H04L 9/0852**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**
Etats de validation désignés:
**KH MA MD TN**

(71) Demandeur: **VeriQloud**
**92120 Montrouge (FR)**

(72) Inventeur: **KAPLAN, Marc**
**92120 Montrouge (FR)**

(74) Mandataire: **Novagraaf Technologies**
**Bâtiment O2**
**2, rue Sarah Bernhardt**
**CS90017**
**92665 Asnières-sur-Seine Cedex (FR)**

(54) **CLIENT SIMPLIFIÉ ET ARCHITECTURES ASSOCIÉES POUR LA DÉLÉGATION DE CALCULS QUANTIQUES À UN SERVEUR QUANTIQUE**

(57) [Système pour la délégation d'un calcul quantique d'au moins un client (10) vers un serveur (20), dans lequel
- ledit serveur comporte au moins une source (21) adaptée pour émettre une séquence d'états quantiques, un dispositif (22) de mesure d'états quantiques reçus, et d'au moins un composant quantique (23) permettant de réaliser ledit calcul quantique ;
- ledit au moins un client comportant une interface d'entrée (11) pour recevoir ladite séquence, un dispositif de transformation (12) adapté pour modifier un état quantique de ladite séquence et une interface de sortie (13) pour transmettre ladite séquence vers ledit dispositif de mesure..

**Fig. 1**

**Description**

DOMAINE DE L'INVENTION

La présente invention est relative à l'informatique quantique en général, et en particulier à la délégation d'un calcul quantique d'un client vers un serveur distant.

CONTEXTE DE L'INVENTION

L'informatique quantique (« *quantum computing* » en anglais) est un domaine qui s'est beaucoup développé au fil de la dernière décennie, du fait de ses nombreuses promesses. Elle utilise les propriétés quantiques de la matière, telle que la superposition et l'intrication afin d'effectuer des opérations sur des données. À la différence d'un ordinateur classique travaillant sur des données binaires (codées sur des bits, valant 0 ou 1), le calculateur quantique travaille sur des « qubits » dont l'état quantique peut posséder une infinité de valeurs.

Néanmoins, tout comme le calcul haute-performance (HPC pour « *High Performance Computing* », en anglais), l'informatique quantique nécessite le déploiement de dispositifs spécifiques pour manipuler ces propriétés quantiques de la matière. Il en résulte que les calculateurs, ou ordinateurs, quantiques devraient rester des systèmes coûteux et qu'une évolution envisagée repose sur un paradigme client/serveur.

Selon ce modèle, des clients peuvent déléguer tout ou partie des calculs quantiques à des serveurs, de sorte que les ressources quantiques les plus coûteuses peuvent ainsi être mutualisées pour plusieurs clients.

Il est également envisagé que de tels serveurs soient accessibles via des réseaux de télécommunication de vaste échelle, tels Internet, sous la forme d'un service : « quantum as a Service », QaaS (ou « calcul quantique à la demande » selon une traduction française). Ainsi, le serveur quantique peut être accessible via une architecture d'informatique en nuage, ou « *cloud* ».

Les clients souhaitant déléguer un calcul quantique auprès de ce serveur doivent donc établir un canal de communication (qui peut être, selon différentes modalités, quantique et/ou classique) avec ce serveur.

Des mécanismes de sécurisation ont été proposés afin d'éviter que des tiers puissent prendre connaissance des calculs effectués. Également, des mécanismes de « calcul aveugle » (ou « *blind computing* » en anglais) ont été proposés afin d'éviter que le serveur lui-même (qui peut être corrompu) puisse connaître les calculs effectués : dès lors, le serveur effectue des calculs sans en connaître ni les opérations ni le résultat ni même les valeurs d'entrées. Il est ainsi possible de déléguer à un serveur des calculs sur des données sans communiquer ces données, par exemple dans le cas où elles ne pourraient pas être légalement rendues publiques (données médicales, données d'entrainement pour l'apprentissage machine, etc.). Il est aussi possible de se prémunir d'une éventuelle corruption du serveur.

Également, des mécanismes de calcul vérifié ont été proposés afin de permettre au client de s'assurer que le serveur effectue bien les calculs demandés.

Ces propositions sont notamment décrites dans « Secure Assisted Quantum Computation » d'Andrew M. Childs, in Quantum Information and Computation 5, 456 (2005), https://arxiv.org/abs/quant-ph/0111046 ou « Universal Blind Quantum Computation » d'Anne Broadbent, Joseph Fitzsimmons et Elham Kashefi, in Proceedings of the 50th Annual IEEE Symposium on Foundations of Computer Science (FOCS 2009), pp. 517-526, https://arxiv.orq/abs/0807.4154v3

D'une façon générale, ces mécanismes de calculs délégués aveugles reposent sur un mécanisme de calcul basé sur la mesure. Ce mécanisme a été décrit dans une série d'articles fondateurs, dont « Measurement-based quantum computation » de Briegel, H. J., Browne, D. E., Dür, W., Raussendorf, R. & Van den Nest, M. in Nature Physics 5, 19 (2009), arXiv:0910.1116v2, ou « Unconditionally verifiable blind computation » de Joseph F. Fitzsimmons et Elham Kashefi in Phys. Rev. A 96, 012303 (2017), https://arxiv.org/abs/1203.5217

Le calcul basé sur la mesure, MBQC (pour « *Measurement-Based Quantum Computation* » en anglais), repose sur une séquence de mesures, dans un ordre précis, d'un qubit précis dans une ressource d'états quantiques intriqués prédéfinis.

La communication entre les clients et le serveur peut se baser sur des schémas types comme, par exemple une procédure de type « préparer et envoyer » ou une procédure de type « recevoir et mesurer ».

Dans les protocoles de type *préparer-et-envoyer,* le client génère des états quantiques et les envoie au serveur qui est capable de les enregistrer pour les utiliser dans un calcul.

Dans les protocoles de type *recevoir-et-mesurer,* le client reçoit un état quantique du serveur et le mesure dans une base de mesure arbitraire. Le serveur ayant préalablement intriqué l'état quantique envoyé au client avec un état de sa mémoire interne, la mesure par le client provoque une préparation à distance de l'état dans la mémoire du serveur.

Quoique le paradigme du calcul quantique délégué permet (et a même pour but) de prévoir des clients nettement plus léger que les serveurs, ces deux types de procédure nécessitent que le client dispose, dans le premier cas, d'un émetteur de qubits (par exemple une source de photons uniques) pour coder les états quantiques, et dans le deuxième cas, d'un dispositif pour mesurer les qubits reçus du serveur (par exemple un détecteur de photons uniques).

De tels dispositifs (sources et détecteurs) sont généralement des équipements complexes et coûteux. Ces coûts forment un frein au développement de l'informatique quantique, et en particulier, à un vaste déploiement de clients adaptés à la délégation de calculs quantiques vers un serveur, par exemple déployé sur un nuage.

RESUME DE L'INVENTION

Un objectif de la présente invention est de fournir une solution palliant au moins partiellement les inconvénients précités.

Plus particulièrement, selon des modes de réalisation, elle vise à simplifier l'architecture des clients, afin d'en abaisser le coût et permettre, ainsi, un plus grand déploiement des clients quantiques pouvant déléguer des calculs quantiques à des serveurs, notamment accessibles via des réseaux de télécommunication quantiques à grande distance, tout en conservant les caractéristiques importantes des architectures de délégations cités ci-dessus, notamment le calcul aveugle et sécurisé et la vérifiabilité du calcul délégué.

À cette fin, selon un premier aspect, la présente invention peut être mise en œuvre par un procédé de délégation d'un calcul quantique par au moins un client vers un serveur, comprenant au moins :

- une première étape comprenant la transmission au serveur d'une description d'intrications à effectuer dans une mémoire quantique ;

- une deuxième étape comprenant l'émission d'une séquence d'états quantiques par ledit serveur vers ledit au moins un client ;

- une troisième étape comprenant une modification d'un état quantique de ladite séquence ;

- une quatrième étape comprenant la transmission de ladite séquence vers ledit serveur ;

- une cinquième étape comprenant l'application d'une séquence de mesures selon une base donnée, au sein de ladite mémoire quantique dont le contenu a été intriqué selon ladite description, et la transmission du résultat de chaque mesure audit au moins un client.

Suivant des modes de réalisation préférés, l'invention comprend une ou plusieurs des caractéristiques suivantes qui peuvent être utilisées séparément ou en combinaison partielle entre elles ou en combinaison totale entre elles :

- les états quantiques fournis par ledit serveur sont une superposition d'états orthogonaux, et la modification effectuée par le client est de la forme $z^{\theta + c.\pi}$ dans laquelle Z est une porte de Pauli selon l'axe Z, θ est choisi de façon aléatoire parmi une liste

$$\left\{0; \pi/4; \pi/2; 3\pi/4\right\}$$

et c est choisi aléatoirement parmi les valeurs 0 et 1 ;

- les états quantiques fournis par ledit serveur sont une superposition d'états orthogonaux, et le procédé comporte en outre une étape de détermination d'un sous-ensemble de qubits pièges et dans la troisième étape comprend une modification de qubits voisins desdits qubits pièges selon ladite description d'intrications, de la forme $X^dH$, dans laquelle H est la transformation de Hadamard, X est une porte de Pauli selon l'axe X et d est choisi parmi les valeurs 0 et 1, et le client met en œuvre une étape de comparaison entre un résultat d'une mesure d'un desdits qubits pièges avec un résultat attendu pour ledit qubit piège, permettant de déterminer une honnêteté dudit serveur ;

- chacun des au moins un client ne peut modifier qu'une partie des états quantiques qui lui est alloué, et transmet ladite séquence vers un client subséquent d'une chaîne de clients le liant au serveur ;
- cette partie des états quantiques peut être déterminée par une allocation d'une fenêtre temporelle ;
- plusieurs clients peuvent modifier successivement un même état quantique de ladite séquence.

Selon un autre aspect, l'invention peut également être mise en œuvre par un système pour la délégation d'un calcul quantique d'au moins un client (10) vers un serveur (20), dans lequel :

- ledit serveur comporte au moins une source adaptée pour émettre une séquence d'états quantiques, un dispositif de mesure d'états quantiques reçus, et d'au moins un composant quantique permettant de réaliser ledit calcul quantique ;
- ledit au moins un client comportant une interface d'entrée pour recevoir ladite séquence, un dispositif de transformation adapté pour modifier un état quantique de ladite séquence et une interface de sortie pour transmettre ladite séquence vers ledit dispositif de mesure.

Suivant des modes de réalisation préférés, le système selon l'invention comprend une ou plusieurs des caractéristiques suivantes qui peuvent être utilisées séparément ou en combinaison partielle entre elles ou en combinaison totale entre elles :

- ce dispositif de transformation comporte un premier dispositif pour appliquer une première transformation visant à préparer des états quantiques pour effectuer un calcul quantique aveugle, et un second dispositif pour appliquer une seconde transformation visant à préparer des états quantiques pour vérifier une honnêteté dudit serveur ;

- le serveur comprend un premier équipement comportant ladite source, et un second équipement comportant ledit dispositif de mesure ;

- ledit premier équipement et ledit second équipement sont répartis en des localisations physiques distinctes ;

- une pluralité de clients sont connectés audit serveur par une ligne de communication unique en formant une chaîne, de sorte que lesdits états quantiques sont transmis de proche en proche depuis ladite source vers ledit dispositif de mesure ;

- chacun desdits clients est configuré pour ne pouvoir modifier que la partie des états quantiques qui lui est alloué ;

- les états quantiques sont des photons et le dispositif de transformation est un modulateur optique :

- le serveur est adapté pour fournir des états quantiques sous la forme d'une superposition d'états orthogonaux, et le dispositif de transformation est adapté pour effectuer une modification de la forme $Z^{\theta+c.\pi}$ dans laquelle Z est une porte de Pauli selon l'axe Z, θ est choisi de façon aléatoire parmi une liste

$$\left\{0; \pi/4; \pi/2; 3\pi/4\right\}$$ et c est choisi aléatoirement parmi les valeurs 0 et 1.

D'une façon générale, un système selon l'invention est configuré pour mettre en œuvre le procédé précédemment défini, selon ses différents modes de réalisation.

D'autres caractéristiques et avantages de l'invention apparaîtront à la lecture de la description qui suit d'un mode de réalisation préféré de l'invention, donnée à titre d'exemple et en référence aux dessins annexés

## BREVE DESCRIPTION DES FIGURES

Les dessins annexés illustrent l'invention :

La figure 1 représente schématiquement un exemple de système selon un mode de réalisation de l'invention.

La figure 2 illustre un organigramme d'un procédé selon un mode de réalisation de l'invention

Les figures 3a, 3b, 3c illustrent des modes de réalisation avec une pluralité de clients.

## DESCRIPTION DETAILLEE DE MODES DE REALISATION DE L'INVENTION

L'invention repose notamment sur un principe que le client ne dispose que d'un moyen de transformer l'information quantique mais ni de moyen de générer, ni de mesurer celle-ci, dans la mesure où la génération et la mesure sont des étapes nécessitant des composants plus complexes et coûteux.

Ces étapes, ou fonctions, sont déportées vers un serveur, ce qui permet de mutualiser les ressources puisqu'un grand nombre de clients peut exister et se connecter à un serveur unique. En outre, cela permet d'abaisser le coût des clients et donc de permettre un plus large accès aux technologies quantiques via des serveurs accessibles via le « cloud » (informatique en nuage).

Également, il devient possible d'alléger et de simplifier l'architecture générale en permettant de raccorder une pluralité de clients à un même serveur au moyen d'une ligne de communication unique.

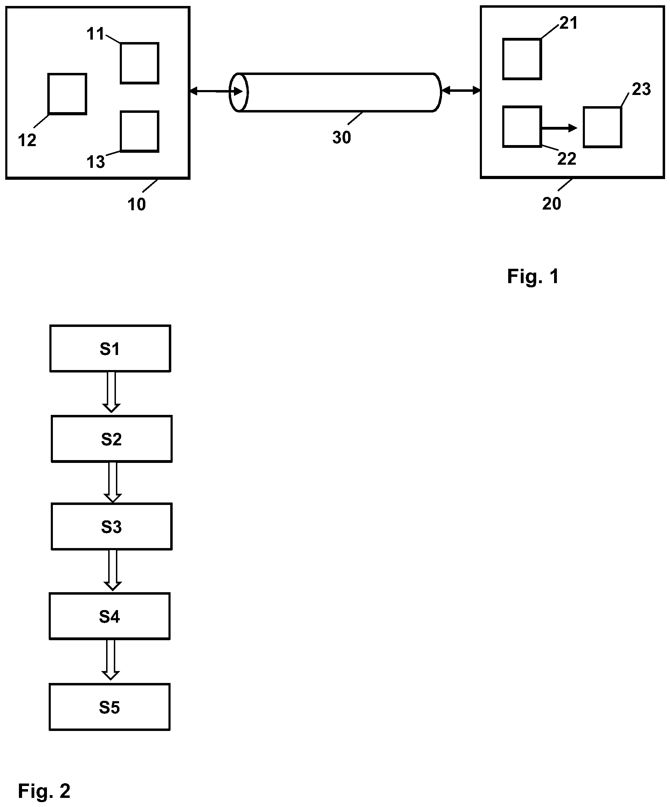

Ainsi qu'illustré sur la Figure 1, un client 10 possède une interface d'entrée 11 adaptée à la réception d'une séquence d'états quantiques, un dispositif de transformation 12 adapté à la modification des états quantiques reçus, et une interface de sortie 13 adaptée à l'émission des états quantiques (éventuellement modifiés par le dispositif de transformation 12).

Le client 10 peut ne posséder que ces trois composants comme composants quantiques. Il peut en outre disposer, bien sûr, de composants classiques (au sens de « non quantiques »), notamment afin de piloter le dispositif de transformation de façon connue en soi.

Ainsi, le client ne dispose ni de source d'états quantiques, ni de dispositifs de mesures d'états quantiques.

En dehors de ces deux éléments supprimés, le client 10 peut être conforme aux clients décrits dans la littérature relative à la délégation de calcul quantique. Notamment, le client peut être du type décrit dans les articles susmentionnés :

- « Secure Assisted Quantum Computation » d'Andrew M. Childs, in Quantum Information and Computation 5, 456 (2005), https://arxiv.orq/abs/quant-ph/0111046 ou

- « Universal Blind Quantum Computation » d'Anne Broadbent, Joseph Fitzsimmons et Elham Kashefi, in Proceedings of the 50th Annual IEEE Symposium on Foundations of Computer Science (FOCS 2009), pp. 517-526, https://arxiv.org/abs/0807.4154v3

Il est à noter qu'un tel client peut être une sous-partie d'un ordinateur ou d'un équipement généraliste, ou bien un équipement autonome pouvant être raccordé à un tel équipement généraliste ou ordinateur. Différents modes de réalisation sont envisageables dans le cadre de la présente invention.

Les états quantiques peuvent être portés par différentes technologies. Selon une mise en œuvre préférentielle, les états quantiques sont portés par des photons.

D'une façon générale, le calcul quantique repose sur la manipulation de données sous forme de bits quantiques ou "qubits". Alors que dans le calcul classique, un bit d'information est utilisé pour représenter seulement un des deux états logiques possibles, à savoir "1" ou "0", dans le calcul quantique, un qubit peut représenter les deux états logiques simultanément comme une superposition d'états quantiques.

En pratique, les qubits peuvent être codés en utilisant les degrés de liberté de différentes particules physiques. Les degrés de liberté sont une propriété physique des systèmes physiques, qui peut être décrite par la mécanique quantique.

En particulier, les qubits peuvent être physiquement mis en œuvre par divers supports, notamment les photons, l'état cohérent de la lumière, les électrons, le noyau d'un atome, les réseaux optiques, les jonctions Josephson pour les qubits supraconducteurs, etc. Une liste non exhaustive peut être trouvée, par exemple, sur Wikipedia : https://en.wikipedia.orq/wiki/Qubit

En conséquence, les degrés de liberté dépendent du support physique et comprennent la phase, les différences de phase, la fréquence, la polarisation, la localisation temporelle des photons. On peut également utiliser les spins des électrons, la charge supraconductrice, le nombre d'électrons, etc.

Les qubits peuvent être écrits comme un vecteur dans un espace vectoriel de Hilbert de dimension d.

Dans une dimension d=2, le qubit peut être défini par une base composée de deux états, qui sont dénommés $|0\rangle$ et $|1\rangle$. Ainsi, l'état $|\alpha\rangle$ du qubit peut être représenté par :

$$|\alpha\rangle = a|0\rangle + b|1\rangle$$

où a et b sont des coefficients de nombres complexes.

Le qubit peut stocker des informations sous la forme d'une combinaison de 0 et 1, en utilisant différentes valeurs de a et b. Cependant, une mesure du qubit l'amènera à se projeter sur l'état $|0\rangle$ ou $|1\rangle$ et à renvoyer le résultat 0 ou 1 respectivement. Les probabilités de renvoyer ces valeurs sont respectivement de $|a|^2$ et $|b|^2$

Selon un mode de réalisation de l'invention, on utilise le photon comme support de qubit. Les bits quantiques peuvent être codés avec des photons selon un degré de liberté de ceux-ci. Par degré de liberté de photon, on entend une propriété physique décrite par la mécanique quantique et utilisable pour des communications quantiques. Des exemples de degrés de liberté des photons sont la phase, la différence de phase, la fréquence, la polarisation ou encore la localisation temporelle.

La source 21 peut alors être un laser apte à générer des photons, combiné avec un modulateur initial apte à moduler un degré de liberté d'un photon généré afin de générer des états quantiques souhaités (comme on le verra plus bas, une superposition d'états notée $|+\rangle$).

Selon un mode de réalisation, la source et le dispositif de transformation 12 effectuent des modulations sur l'intervalle de temps pour lequel on veut générer/transformer un photon, dont l'énergie globale correspond à un quantum d'énergie du photon.

Selon un autre mode de réalisation, on utilise la différence de phase comme degré de liberté pour encoder les qubits. Aussi, la source 21 génère les photons en effectuant une modulation selon deux pics, chacun dans un demi-intervalle de l'intervalle correspondant au photon que l'on souhaite générer. L'énergie globale de cette modulation étant, par configuration, égale au quantum d'énergie d'un photon, chaque photon ainsi généré est une superposition d'un photon entre ces deux demi-intervalles.

Le laser peut être prévu avec une longueur d'onde de 1550 nm qui correspond à l'atténuation minimale dans les fibres optiques communément utilisés en télécommunication.

La ligne 30 peut être une fibre optique.

Les dispositifs de transformation 12 peuvent alors être des modulateurs optiques. Ils ne sont pas prévus pour émettre des photons mais uniquement pour moduler un champ électromagnétique dans lequel passent les photons afin de modifier un degré de liberté de ceux-ci. Comme il sera vu plus tard, chaque dispositif de transformation peut, selon un mode de réalisation, comporter au moins deux modulateurs optiques, chacun prévu pour moduler les photons selon un axe différent de la sphère de Bloch représentant le degré de liberté retenu.

Au travers du lien de communication 30, le client 10 est en communication avec un serveur 20.

Le serveur 20 dispose de circuits quantiques et éventuellement de circuits conventionnels (permettant notamment le contrôle de ces circuits quantiques). Il peut notamment comporter une source 21 adaptée pour émettre une séquence d'états quantiques et un dispositif 22 de mesure d'états quantiques reçus.

Le serveur 20 peut outre comporter un ou plusieurs élément(s) quantique(s) 23 permettant d'effectuer les calculs quantiques qui sont délégués au serveur. Ces composants quantiques peuvent notamment comprendre une mémoire quantique permettant de stocker des qubits reçus, des moyens pour effectuer des opérations sur un ou plusieurs qubits, etc. La nature de ces éléments quantiques dépend de la technologie retenue et de différents modes de réalisation possibles.

Le dispositif de mesure 22 du serveur 20 peut être un détecteur de photons uniques, c'est-à-dire pouvant mesurer l'état quantique d'un photon individuel et non pas un flux, ou une énergie, lumineuse. Différents mécanismes existent dans l'état de la technique. On peut par exemple citer par exemple les détecteurs basés sur des photodiodes à avalanches (APD pour « *Avalanche*

*PhotoDiode* » en anglais).

Plus généralement, selon différents modes de réalisation de l'invention et en fonction du type de degré de liberté, différents types de modulateurs et de détecteurs peuvent être utilisés.

Lorsque le degré de liberté des photons pour encoder les bits quantiques est la phase, les modulateurs peuvent être des modulateurs de phase. Par exemple, le modèle LN53S-FC ou LN65S-FC commercialisé par la société Thorlabs peut être utilisé.

Lorsque le degré de liberté des photons pour encoder les bits quantiques est la polarisation des photons, les modulateurs peuvent être des modulateurs de polarisation. Par exemple, un modèle de la série de produits PSC-LN series commercialisé par la société iXblue Photonics peut être utilisé.

Lorsque le degré de liberté des photons pour encoder les bits quantiques est la localisation temporelle des photons, les modulateurs peuvent comprendre chacun un nombre d de lignes à retard et un nombre 2d de lames séparatrices, où d représente la dimension de l'espace vectoriel hilbertien de représentation des états quantiques. Afin de réaliser un calcul aveugle, on peut démontrer qu'il faut et qu'il suffit de savoir encoder des états dans des bases incompatibles entre elles. La superposition de localisations temporelles à réaliser pour encoder un qubit dans une base parmi un ensemble de bases incompatibles peut être obtenue en programmant les lames séparatrices.

D'une façon générale, les modulateurs de photon sont des dispositifs de télécommunication standards, et donc peu coûteux et produits à grande échelle.

D'autres mises en œuvre sont possibles, y compris des mises en œuvre non basés sur le photon.

Dans le cas où les qubits manipulés par le serveur sont couplés au domaine micro-onde (par exemple qubit supraconducteur), la communication avec le client pourra se faire :

- Soit par la transduction de l'information quantique dans le domaine optique tel que décrite par exemple dans l'article « Superconducting qubit to optical photon transduction » de Mohammad Mirhosseini, Alp Sipahigil, Mahmoud Kalaee & Oskar Painter in Nature 588, 599-603 (2020). https://doi.orq/10.1038/s41586-020-3038-6. Ceci permet d'appliquer les méthodes décrites précédemment pour manipuler des photons.

- Soit par l'utilisation par le client d'un système quantique auxiliaire tel qu'un qubits supraconducteur, ou un qubit semi-conducteur, par exemple à base de silicium. En particulier, le couplage entre un qubit supraconducteur (qui peut être utilisé par le serveur) et un qubit semi-conducteur (qui peut être utilisé par le client) est décrit dans l'article « Coherent microwave-photon-mediated coupling between a semiconductor and a superconducting qubit » de Scarlino, P., van Woerkom, D.J., Mendes, U.C. et al. in Nat Commun 10, 3011 (2019). https://doi.orq/10.1038/s41467-019-10798-6. Après réception et stockage du qubit par le client, celui-ci pourra appliquer une transformation en utilisant les techniques standards de manipulation de l'information quantique avant de renvoyer le qubit ainsi obtenu par le serveur.

Dans le dernier cas, le client est donc équipé d'un système quantique complexe, mais limité à un seul qubit. Il s'ensuit que le client est considérablement plus simple que le serveur qui a la capacité de manipuler un nombre plus important de qubits.

L'invention est ainsi indépendante du type de technologies pour encoder et transformer les qubits (états quantiques).

Protocole avec un client simplifié

La figure 2 illustre un procédé selon un mode de réalisation de l'invention. Ce mode de réalisation se base sur les mécanismes de calcul délégué basé sur la mesure tels que décrits dans les articles suscités de Childs et al. et de Broadbent, Fitzsimmons et Kashefi. Selon ces mécanismes, le serveur comporte une mémoire quantique qui est d'abord préparée dans un état intriqué. Cet état, appelé « *cluster state* », ou « *graph state* » en anglais, est universel, au sens où il ne dépend pas du calcul quantique à effectuer. Il forme un « substrat » sur lequel peut opérer une phase subséquente de calcul propre dit.

Dans cette phase de calcul, le client indique une séquence de mesures à effectuer individuellement sur certains qubits de la mémoire quantique du serveur, ou graphe d'état. Ces mesures spécifient véritablement l'algorithme de calcul quantique à effectuer sur le serveur. L'algorithme quantique correspond donc à un traitement ordonné de corrélations quantiques. Il peut donc consister en une séquence d'identifiants de qubit à mesurer associés à une base de mesure.

Dans le cadre d'un calcul aveugle, le graphe d'état et l'algorithme (définissant l'ordonnancement des mesures à effectuer) peuvent être connus de l'ensemble des parties. Le « secret », rendant le calcul aveugle, réside dans l'état individuel des qubits fournis au serveur.

Plus précisément, dans une phase de préparation, une étape S1 consiste en la transmission au serveur d'une description de la ressource de calcul, c'est-à-dire d'intrications à effectuer dans une mémoire quantique du serveur. Cette étape définit le graphe d'état au sein du serveur.

Pour ce faire, le client envoie au serveur la description (classique) de la ressource de calcul. Cette ressource est en général un état quantique composé de plusieurs qubits intriqués les uns avec les autres. La description envoyée par le client consiste en les relations d'intrications entre les qubits, mais pas dans la description des qubits eux-mêmes. Celle-ci reste en effet cachée au serveur et est, selon l'invention, fournit ultérieurement au serveur par le client lors de l'étape S4.

Dans une étape S2, une source 21 émet une séquence d'état sur l'interface d'entrée 11 du client. Ces états quantiques sont transmis via un lien de communication 30. Typiquement, ce lien de communication 30 est une fibre optique permettant la transmission de photons, mais d'autres mises en œuvre sont évidemment possibles dans le cadre de l'invention.

Dans une étape S3, un moyen, ou dispositif, de transformation 12 applique les transformations nécessaires à chaque état, l'un après l'autre. Les états quantiques peuvent être ainsi modifiés, de façon aveugle pour le serveur.

Dans un procédé de calcul délégué aveugle classique, le masquage de l'information au serveur provient d'un choix très spécifique des états envoyés par le client au serveur. Dans le processus selon l'invention, néanmoins, le serveur a la maitrise de la génération des états quantiques initiaux. Aussi, le masquage de l'information est assuré par la combinaison d'un choix des états quantiques initiaux générés par la source 21 du serveur 20, et par les transformations appliquées par le client.

En particulier, la source 20 peut générer une séquence d'états quantiques $|+\rangle$

Ces états sont, chacun, une superposition d'états orthogonaux, de sorte que

$$|+\rangle = \frac{1}{\sqrt{2}}(|0\rangle + ||1\rangle)$$

Le dispositif de transformation 12 peut appliquer des transformations, de manière à ce que le serveur ne puisse pas les identifier avec certitude.

Pour ce faire, ces transformations peuvent être de la forme :

$$Z^{\theta + c.\pi}$$

dans laquelle

- Z est une porte de Pauli selon l'axe Z,

- $\theta$ est choisi de façon aléatoire parmi une liste

$$\left\{ 0; \frac{\pi}{4}; \frac{\pi}{2}; \frac{3\pi}{4} \right\}$$

- c est choisi aléatoirement parmi les valeurs 0 et 1

La porte Pauli-Z agit sur un seul qubit. Cela équivaut à une rotation autour de l'axe Z de la sphère de Bloch par $\pi$ radians. Elle laisse l'état $|0\rangle$ inchangé et transforme l'état $|1\rangle$ en $-|1\rangle$. Elle peut être représentée par la matrice Pauli-Z :

$$Z = \begin{bmatrix} 1 & 0 \\ 0 & -1 \end{bmatrix}$$

Ainsi, en appliquant la transformation $Z^{\theta + c.\pi}$, on obtient en sortie l'état quantique suivant :

$$|0\rangle + e^{\theta + c.\pi}|1\rangle$$

Cet état est habituellement noté $|+_{\theta + c.\pi}\rangle$

L'envoi de tels états au serveur suffit à masquer entièrement le calcul qu'il effectue. Les clés permettant de déchiffrer le calcul et son résultat sont les valeurs $\theta$ et c choisies pour chaque qubit

Dans une étape S4, les états transmis au client sont renvoyés au serveur après que les transformations ont été appliquées.

Le reste du protocole peut être conforme à ceux décrits dans la littérature. Ainsi, dans une étape S5, le serveur applique une séquence de mesure sur chacun des qubits dans un ordre prédéterminé ainsi qu'évoqué précédemment. La base de mesure de chaque qubit est choisie de manière interactive en communiquant au client le résultat de chaque mesure. Le client spécifie alors au serveur la base dans laquelle mesurer le qubit suivant, et ainsi de suite.

La dernière mesure donne le résultat du calcul de manière chiffrée. Son résultat est transmis au client qui peut le déchiffrer afin de lire le résultat du calcul.

Le choix de la transformation $Z^{\theta + c.\pi}$ permet de masquer les informations au serveur. D'autres choix de transformation sont également possibles.

Notamment, d'autres transformations peuvent être utilisées afin de rendre le protocole vérifiable, c'est-à-dire de s'assurer (pour le client) que le serveur applique bien le protocole convenu, sans en altérer les opérations. Cela peut notamment être intéressant pour vérifier si le serveur n'a pas été corrompu et/ou si celui-ci est digne de confiance. En effet, notamment dans le cadre d'un déploiement d'un serveur sur une plateforme publique, telle qu'un « *cloud* », il peut être important, voire essentiel, de pouvoir assurer de la légitimité, ou honnêteté, du serveur.

Un mécanisme permettant la vérifiabilité par le client des calculs effectués par le serveur a été proposé dans l'article « *Unconditionally verifiable blind computation* » précédemment cité. Celui repose sur l'idée de faire faire un calcul au serveur dont le résultat est prévisible afin de comparer le résultat obtenu du serveur avec celui escompté. Pour ce faire, il est nécessaire d'isoler les qubits sur lesquels portent le calcul au sein du graphe d'état, c'est-à-dire de s'assurer qu'ils ne sont pas intriqués avec leurs voisins, afin que le calcul soit effectivement prévisible.

Selon un mode de réalisation, lors de la phase de préparation, le client choisit un certain nombre de qubit qui seront des « pièges » pour le serveur. Le nombre de qubit choisi est un paramètre de sécurité : plus il est élevé, plus il sera difficile pour le serveur de tricher.

Le sous-ensemble des qubits pièges peut être choisi de façon masquée au serveur, selon donc un schéma qui lui est inconnu. Il faut par contre isoler chacun de ces qubits pièges, c'est-à-dire faire en sorte qu'ils ne soient pas, au moment de la mesure, encore intriqués avec d'autres qubits de la mémoire quantique du serveur, afin que le résultat de la mesure soit prédictible.

Ainsi, pour chaque qubit lié avec un qubit piège dans le graphe d'état (qui décrit les intrications à effectuer entre qubits au sein de la mémoire quantique du serveur), le client prépare un état avec une transformation $X^dH$ sur l'état $|+\rangle$ reçu. Ces qubits sont dits « factices » et ne sont pas utilisés par le calcul en tant que tel.

H représente la transformation de Hadamard, X est une porte de Pauli selon l'axe X et d est choisi parmi les valeurs 0 et 1.

La transformation de Hadamard agit sur un seul qubit et transforme un état $|0\rangle$ en une superposition d'états équiprobables $|+\rangle$ et un état $|1\rangle$ en une superposition $|-\rangle$. Elle correspond à la combinaison d'une rotation de $\pi$ selon l'axe X et d'une rotation de $\pi/2$ sur l'axe Y, selon la sphère de Bloch. Elle peut être représentée par la matrice de Hadamard :

$$H = \frac{1}{\sqrt{2}} \cdot \begin{bmatrix} 1 & 1 \\ 1 & -1 \end{bmatrix}$$

La porte Pauli-X agit sur un seul qubit. Cela équivaut à une rotation autour de l'axe X de la sphère de Bloch par $\pi$ radians. Elle équivaut à une porte « NON » en logique conventionnelle puisqu'elle échange les états $|0\rangle$ et $|1\rangle$. Elle peut être représentée par la matrice Pauli-X :

$$X = \begin{bmatrix} 0 & 1 \\ 1 & 0 \end{bmatrix}$$

Le nombre d indique si la transformation selon la porte Pauli X a lieu (d=1) ou n'a pas lieu (d=0).

Les qubits de pièges sont préparés en appliquant une transformation $Z^{\theta+c.\pi}$ sur l'état $|+\rangle$ reçu.

Lorsque, toujours dans la phase de préparation, le serveur va appliquer le graphe d'état pour établir les intrications entre qubits adjacents, l'opération d'intrication effectuée par le serveur entre un qubit de piège et un qubit factice sera sans effet, du fait de la préparation basée sur la transformation $X^dH$ appliquée à l'état $|1+\rangle$.

Ainsi, le client peut ordonner au serveur d'effectuer, sur chaque qubit de piège, une mesure dont il peut prédire le résultat. Si les résultats de mesure sont conformes aux prédictions, alors il sait que le serveur n'a pas dévié du calcul ordonné par le client. Inversement, en cas d'erreurs trop nombreuses dans les résultats de mesure des qubits de piège, le client saura que le serveur n'a pas réalisé les opérations conformes à ses instructions. Le client peut ainsi s'assurer de l'honnêteté du serveur.

On peut remarquer que les portes logiques mises en œuvre à l'étape S3, qui correspond à la seule manipulation quantique opérée par les clients, correspondent à des rotations selon des axes différents dans le cas d'un calcul quantique et dans le cas d'une vérification de l'honnêteté du serveur.

Selon un mode de réalisation de l'invention, le dispositif de transformation 22 comporte deux (ou plus) dispositifs distincts, chacun adapté pour une transformation particulière. Ainsi, un premier dispositif peut appliquer une première transformation visant à préparer les qubits nécessaires pour effectuer un calcul quantique, et un second dispositif peut appliquer une seconde transformation visant à préparer les qubits nécessaires pour vérifier une honnêteté dudit serveur. Par exemple, un premier dispositif (par exemple un modulateur optique) est adapté à la transformation $Z^{\theta+c.\pi}$, et un second dispositif (par exemple un second modulateur optique) est adapté à la transformation $X^dH$

Architectures N clients / 1 serveur

Comme il a été vu précédemment, un des avantages d'un client selon l'invention consiste en sa simplicité permettant d'en abaisser le coût et de faciliter le déploiement à grande échelle.

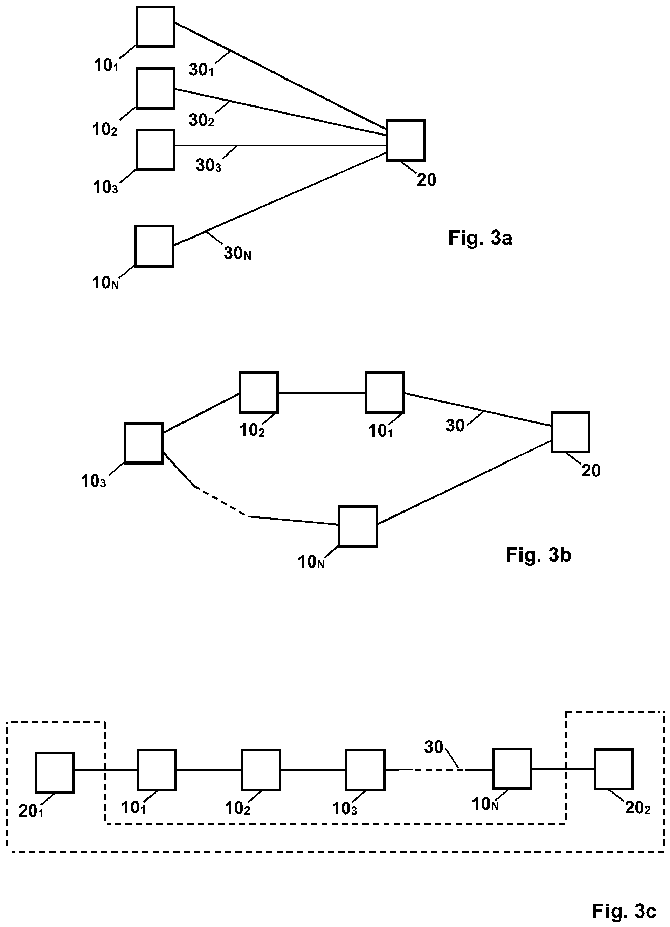

Selon un mode de réalisation illustré par la figure 3a, il est ainsi possible de connecter un grand nombre de clients $10_1$, $10_2$, $10_3$... $10_N$ à un unique serveur 20, via autant de lignes de communication, respectivement $30_1$, $30_2$, $30_3$... $30_N$.

Le serveur 20 peut alors posséder un commutateur lui permettant de recevoir les séquences d'états quantiques émis par les différents clients vers ses ressources quantiques mutualisées (notamment le dispositif de mesure).

Dans le cas où le client est unique, on est ramené à la situation illustrée en figure 1 et le serveur ne nécessite évidemment pas l'utilisation d'un commutateur.

Le client simplifié selon l'invention permet également de connecter plusieurs clients à un même serveur via une ligne de communication unique, ainsi qu'illustré en figures 3b et 3c.

Ainsi, sur la figure 3b, une ligne 30 unique connecte le serveur 20 aux clients $30_1$, $30_2$, $30_3$... $30_N$.

Les clients forment ainsi une chaîne selon laquelle chaque client $10_i$ peut posséder un client précédent $10_{i-1}$ dans la chaîne (sauf le premier client $10_1$ connecté directement au serveur 20) et un client subséquent $10_{i+1}$ (sauf le dernier client $10_N$ connecté directement au serveur 20), de sorte que les états quantiques sont transmis de proche en proche depuis la source 21 vers le dispositif de mesure 22. Dans la mesure où la source et le dispositif de mesure appartiennent à un même serveur 20, cette chaîne peut être considérée comme une boucle physique (fonctionnellement toutefois, l'image d'une chaîne reste plus pertinente puisque les clients relient une source à une destination).

Ainsi, le serveur n'a qu'une seule ligne de communication entrante mais ses capacités de calcul sont néanmoins mutualisées entre tous les clients, ceux-ci pouvant être très nombreux.

Une telle architecture est rendue possible par le fait que les clients simplifiés selon l'invention ne disposent que d'un dispositif de transformation quantique. Celui-ci peut transformer ou pas les états quantiques qui lui sont transmis, de sorte que les états quantiques ne sont modifiés que par le, ou les, clients souhaités.

Selon l'invention, les dispositifs constructeur (source) et destructeur (mesure) d'états quantiques sont relégués en bout de chaîne et ne perturbent donc pas la transmission de bout en bout via une pluralité de clients intermédiaires.

Selon un mode de réalisation, la ligne de communication peut être partagée, ou mutualisée, entre les différents clients qui y sont connectés, en leur allouant une partie des états quantiques fournis par la source 21 du serveur 20.

Ainsi, chaque client de la chaîne ne peut modifier que la partie des états quantiques qui lui est alloué, et transmet l'ensemble de la séquence vers le client subséquent dans la chaîne (ou vers le serveur pour le dernier).

Cette partie peut par exemple être déterminée par une allocation d'une fenêtre temporelle. Ainsi, chaque client se voit allouer une fenêtre disjointe des autres clients de la chaîne et ne modifie (éventuellement) que les états quantiques reçus dans la fenêtre qui lui a été allouée. Chaque état quantique émis par la source peut donc n'être modifié que par un unique client de la chaîne.

Ces fenêtres temporelles peuvent être périodiques, c'est-à-dire que l'axe du temps peut être subdivisé en période, et chaque période subdivisée en une séquence ordonnée de fenêtres temporelles allouées individuellement à un client et dont l'ordre est préférentiellement identique d'une période à l'autre.

Ainsi, un simple démultiplexage temporel peut permettre au serveur 20 de savoir, à chaque instant, avec quel client il est en interaction.

Dans le mode de réalisation de la figure 3b, la source 21 et le dispositif de mesure 22 sont colocalisés au sein d'un serveur 20 « centralisé ». La ligne 30 forme donc une boucle.

La figure 3c illustre une variante dans laquelle le serveur 20 peut être réparti sur plusieurs localisations physiques.

Selon un tel mode de réalisation, le serveur 20 comprend un premier équipement $20_1$ comportant la source 21, et un second équipement $20_2$ comportant le dispositif de mesure 22.

Ces équipements peuvent être distincts et autonomes. En particulier, ils peuvent posséder chacun des microprocesseurs indépendants, et une source d'alimentation indépendantes. Ils peuvent en outre être localisés en des lieux géographiques distincts. Ils peuvent néanmoins appartenir à une même entité légale, par exemple un opérateur de télécommunication : celui-ci peut prévoir un équipement pour générer les états quantiques en une première localisation, et un autre équipement pour les mesurer (et effectuer le traitement quantique) en une seconde localisation distincte.

Selon un mode de réalisation, plusieurs clients peuvent interagir avec un même qubit généré par la source. Plusieurs clients peuvent ainsi modifier, successivement, un même état quantique de la séquence d'états générés par la source.

Ainsi, un premier client peut modifier une partie des états quantiques transmis, et au moins un second client peut modifier à nouveau tout ou partie de ces états quantiques. Ces premiers et seconds clients peuvent ne représenter qu'une partie de la chaîne de clients et ne sont pas nécessairement successifs.

Selon un mode de réalisation, une sous-partie de la séquence d'états quantiques, correspondant par exemple à une fenêtre temporelle, peut être allouée à une telle pluralité de clients.

Cette possibilité de modifications successives par plusieurs clients d'un même état quantique permet de réaliser des calculs multipartites, c'est-à-dire de préparer un état à destination du serveur dont les entrées dépendent de plusieurs clients.

En particulier, cette tâche peut être utile pour réaliser un calcul multipartite sécurisé, c'est-à-dire un calcul qui dépend des entrées de plusieurs clients, mais effectué de manière à ne pas révéler lesdites entrées. Ce type de calcul est par exemple décrit dans « Multiparty Delegated Quantum Computing » de Elham Kashefi et Anna Pappa, in Cryptography 2017, 1(2), 12, https://arxiv.org/abs/1606.09200v2 ou bien « Actively Secure Two-Party Evaluation of any Quantum Opération » de Frédéric Dupuis, Jesper Buus Nielsen et Louis Savail, in Proceedings of the 32nd Annual Cryptology Conférence on Advances in Cryptology, vol. 7417, Août 2012, https://doi.org/10.1007/978-3-642-32009-5 46

Selon une mise en œuvre basée sur celle de l'article d'Elham Kashefi et Anna Pappa susmentionné, on peut modifier les protocoles décrits afin de les appliquer au contexte d'un client simplifié.

Ainsi, dans le protocole 1 décrit en page 8, chaque client impliqué dans le calcul multipartite envoi un état de la forme $|+_{\theta i}\rangle$. Ensuite, le serveur qui a reçu tous ces états réalise une opération qui lui permet de préparer l'état $|+_\theta\rangle$, où $\theta$ est la somme de tous les $\theta_i$ (protocole 3). Cet état forme la ressource qui permet au serveur de réaliser un calcul délégué multipartite (protocole 4).

Grace aux avantages combinés d'un client simplifié et d'une architecture en ligne d'une chaîne de clients, il est possible de préparer directement cet état $|+_\theta\rangle$

Il suffit pour cela que, partant de l'état $|+\rangle$ généré par la source, chaque client impliqué dans le calcul réalise la rotation $Z^{\theta i}$ correspondant à son entrée $\theta_i$. Le cumul, des rotations effectués successivement par chacun des clients impliqués permet de préparer l'état $|+_\theta\rangle$ en sortie du dernier client (et donc en entrée du serveur).

Cette architecture simplifie donc largement la phase de préparation de l'état initial du calcul.

Bien entendu, la présente invention n'est pas limitée aux exemples et au mode de réalisation décrits et représentés, mais est défini par les revendications. Elle est notamment susceptible de nombreuses variantes accessibles à l'homme de l'art.

**Revendications**

1. Procédé de délégation d'un calcul quantique par au moins un client vers un serveur, comprenant

   - une première étape (S1) comprenant la transmission au serveur d'une description d'intrications à effectuer dans une mémoire quantique;
   - une deuxième étape (S2) comprenant l'émission d'une séquence d'états quantiques par ledit serveur vers ledit au moins un client ;
   - une troisième étape (S3) comprenant une modification d'un état quantique de ladite séquence,
   - une quatrième étape (S4) comprenant la transmission de ladite séquence vers ledit serveur ;
   - une cinquième étape (S5) comprenant l'application d'une séquence de mesures selon une base donnée, au sein de ladite mémoire quantique dont le contenu a été intriqué selon ladite description, et la transmission du résultat de chaque mesure audit au moins un client.

2. Procédé selon la revendication précédente, dans lequel les états quantiques fournis par ledit serveur sont une superposition d'états orthogonaux, et la modification effectuée par ledit client est de la forme $Z^{\theta + c.\pi}$ dans laquelle Z est une porte de Pauli selon l'axe Z, $\theta$ est choisi de façon aléatoire parmi une liste

$$\left\{0; \frac{\pi}{4}; \frac{\pi}{2}; \frac{3\pi}{4}\right\}$$ et c est choisi aléatoirement parmi les valeurs 0 et 1

3. Procédé selon la revendication 1, dans lequel les états quantiques fournis par ledit serveur sont une superposition d'états orthogonaux, et comportant une étape de détermination d'un sous-ensemble de qubits pièges et dans lequel ladite troisième étape comprend une modification de qubits voisins desdits qubits pièges selon ladite description d'intrications, de la forme $X^d H$, dans laquelle H est la transformation de Hadamard, X est une porte de Pauli selon l'axe X et d est choisi parmi les valeurs 0 et 1, et ledit client met en œuvre une étape de comparaison entre un résultat d'une mesure d'un desdits qubits pièges avec un résultat attendu pour ledit qubit piège, permettant de déterminer une honnêteté dudit serveur.

4. Procédé selon l'une des revendications précédentes, dans lequel chacun desdits au moins un client ne peut modifier qu'une partie des états quantiques qui lui est alloué, et transmet ladite séquence vers un client subséquent d'une chaîne de clients le liant audit serveur.

5. Procédé selon la revendication précédente, dans lequel ladite partie est déterminée par une allocation d'une fenêtre temporelle.

6. Procédé selon l'une des revendications précédentes, dans lequel plusieurs clients peuvent modifier successivement un même état quantique de ladite séquence.

7. Système pour la délégation d'un calcul quantique d'au moins un client (10) vers un serveur (20), dans lequel

   - ledit serveur comporte au moins une source (21) adaptée pour émettre une séquence d'états quantiques, un dispositif (22) de mesure d'états quantiques reçus, et d'au moins un composant quantique (23) permettant de réaliser ledit calcul quantique ;
   - ledit au moins un client comportant une interface d'entrée (11) pour recevoir ladite séquence, un dispositif de transformation (12) adapté pour modifier un état quantique de ladite séquence et une interface de sortie (13) pour transmettre ladite séquence vers ledit dispositif de mesure.

8. Système selon la revendication précédente, dans lequel ledit dispositif de transformation (12) comporte un premier dispositif pour appliquer une première transformation visant à préparer des états quantiques pour effectuer un calcul quantique aveugle, et un second dispositif pour appliquer une seconde transformation visant à préparer des états quantiques pour vérifier une honnêteté dudit serveur.

9. Système selon la revendication précédente, dans lequel ledit serveur comprend un premier équipement $(20_1)$ comportant ladite source, et un second équipement $(20_2)$ comportant ledit dispositif de mesure.

**10.** Système selon la revendication précédente, dans lequel ledit premier équipement et ledit second équipement sont répartis en des localisations physiques distinctes.

**11.** Système selon la revendication précédente, dans lequel une pluralité de clients sont connectés audit serveur par une ligne de communication unique (30) en formant une chaîne, de sorte que lesdits états quantiques sont transmis de proche en proche depuis ladite source vers ledit dispositif de mesure.

**12.** Système selon la revendication précédente, lequel chacun desdits clients est configuré pour ne pouvoir modifier que la partie des états quantiques qui lui est alloué.

**13.** Système selon l'une des revendications 7 à 12, dans lequel lesdits états quantiques sont des photons et ledit dispositif de transformation est un modulateur optique.

**14.** Système selon l'une des revendications 7 à 13, dans lequel ledit serveur est adapté pour fournir des états quantiques sous la forme d'une superposition d'états orthogonaux, et ledit dispositif de transformation est adapté pour effectuer une modification de la forme $Z^{\theta+c.\pi}$ dans laquelle Z est une porte de Pauli selon l'axe Z, $\theta$ est choisi de façon aléatoire parmi une liste

$$\left\{0; {\pi}/{4}; {\pi}/{2}; {3\pi}/{4}\right\}$$ et c est choisi aléatoirement parmi les valeurs 0 et 1

**15.** Système selon l'une des revendications 7 à 14, adapté pour la mise en œuvre d'un procédé selon l'une des revendications 1 à 6.

11

12

13

10

21

23

22

20

30

**Fig. 1**

S1

S2

S3

S4

S5

**Fig. 2**

Fig. 3a

Fig. 3b

Fig. 3c

Europäisches
Patentamt

European
Patent Office

Office européen
des brevets

**RAPPORT DE RECHERCHE EUROPEENNE**

Numéro de la demande

EP 21 30 5294

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | QIN LI ET AL: "Blind quantum computation for a user who only performs single-qubit gates", ARXIV.ORG, 27 juin 2020 (2020-06-27), XP081701009, * abrégé * * section III-A, lignes 8-13 * * section III-A, lignes 17-24 * * section III-B, lignes 1-23 * ----- | 1-15 | INV. G06N10/00 H04L9/08 |
| X | BROADBENT ANNE ET AL: "Universal Blind Quantum Computation", FOUNDATIONS OF COMPUTER SCIENCE, 2009. FOCS '09. 50TH ANNUAL IEEE SYMPOSIUM ON, 1 octobre 2009 (2009-10-01), pages 517-526, XP55834628, Piscataway, NJ, USA DOI: 10.1109/FOCS.2009.36 ISBN: 978-1-4244-5116-6 Extrait de l'Internet: URL:https://ieeexplore.ieee.org/stampPDF/getPDF.jsp?tp=&arnumber=5438603&ref=aHR0cHM6Ly9zY2hvbGGyLmdvb2dsZS5jb20v> | 1-6 | |
| A | * section 1.3 * * section 2 * * Protocol 1 * * figure 1 * ----- | 7-15 | **DOMAINES TECHNIQUES RECHERCHES (IPC)** G06N H04L |
| A | FR 3 091 384 A1 (VERIQLOUD [FR]) 3 juillet 2020 (2020-07-03) * le document en entier * ----- | 1-15 | |

-/--

Le présent rapport a été établi pour toutes les revendications

| Lieu de la recherche | Date d'achèvement de la recherche | Examinateur |
|---|---|---|
| La Haye | 26 août 2021 | Aoun, Marc |

CATEGORIE DES DOCUMENTS CITES

X : particulièrement pertinent à lui seul
Y : particulièrement pertinent en combinaison avec un
   autre document de la même catégorie
A : arrière-plan technologique
O : divulgation non-écrite
P : document intercalaire

T : théorie ou principe à la base de l'invention
E : document de brevet antérieur, mais publié à la
   date de dépôt ou après cette date
D : cité dans la demande
L : cité pour d'autres raisons

   ....................................................
& : membre de la même famille, document correspondant

EPO FORM 1503 03.82 (P04C02)

| | Europäisches Patentamt<br>European Patent Office<br>Office européen des brevets | **RAPPORT DE RECHERCHE EUROPEENNE** | Numéro de la demande<br>EP 21 30 5294 |
|---|---|---|---|

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | WOJCIECH KOZLOWSKI ET AL: "Towards Large-Scale Quantum Networks", ARXIV.ORG, CORNELL UNIVERSITY LIBRARY, 201 OLIN LIBRARY CORNELL UNIVERSITY ITHACA, NY 14853, 6 septembre 2019 (2019-09-06), XP081478605, DOI: 10.1145/3345312.3345497 * le document en entier * ----- | 4-6,11, 12 | |
| | | | **DOMAINES TECHNIQUES RECHERCHES (IPC)** |

Le présent rapport a été établi pour toutes les revendications

| Lieu de la recherche | Date d'achèvement de la recherche | Examinateur |
|---|---|---|
| La Haye | 26 août 2021 | Aoun, Marc |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 21 30 5294

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

26-08-2021

| Document brevet cité au rapport de recherche | Date de publication | Membre(s) de la famille de brevet(s) | Date de publication |
|---|---|---|---|
| FR 3091384 A1 | 03-07-2020 | CA 3124464 A1<br>FR 3091384 A1<br>WO 2020136097 A1 | 02-07-2020<br>03-07-2020<br>02-07-2020 |

Pour tout renseignement concernant cette annexe : voir Journal Officiel de l'Office européen des brevets, No.12/82

EPO FORM P0460

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **D'ANDREW M. CHILDS.** Secure Assisted Quantum Computation. *Quantum Information and Computation,* 2005, vol. 5, 456, https://arxiv.org/abs/quant-ph/0111046
- **ANNE BROADBENT ; JOSEPH FITZSIMMONS ; ELHAM KASHEFI.** Universal Blind Quantum Computation. *Proceedings of the 50th Annual IEEE Symposium on Foundations of Computer Science (FOCS 2009),* 2009, 517-526, https://arxiv.orq/abs/0807.4154v3
- **BRIEGEL, H. J. ; BROWNE, D. E. ; DÜR, W. ; RAUSSENDORF, R. ; VAN DEN NEST, M.** Measurement-based quantum computation. *Nature Physics,* 2009, vol. 5, 19
- **JOSEPH F. FITZSIMMONS ; ELHAM KASHEFI.** Unconditionally verifiable blind computation. *Phys. Rev. A,* 2017, vol. 96, 012303, https://arxiv.org/abs/1203.5217
- **ANDREW M. CHILDS.** Secure Assisted Quantum Computation. *Quantum Information and Computation,* 2005, vol. 5, 456, https://arxiv.orq/abs/quant-ph/0111046

- **ANNE BROADBENT ; JOSEPH FITZSIMMONS ; ELHAM KASHEFI.** Universal Blind Quantum Computation. *Proceedings of the 50th Annual IEEE Symposium on Foundations of Computer Science (FOCS 2009),* 2009, 517-526, https://arxiv.org/abs/0807.4154v3
- **MOHAMMAD MIRHOSSEINI ; ALP SIPAHIGIL ; MAHMOUD KALAEE ; OSKAR PAINTER.** Superconducting qubit to optical photon transduction. *Nature,* 2020, vol. 588, 599-603, https://doi.orq/10.1038/s41586-020-3038-6
- **SCARLINO, P. ; VAN WOERKOM, D.J. ; MENDES, U.C. et al.** Coherent microwave-photon-mediated coupling between a semiconductor and a superconducting qubit. *Nat Commun,* 2019, vol. 10, 3011, https://doi.orq/10.1038/s41467-019-10798-6
- **ELHAM KASHEFI ; ANNA PAPPA.** Multiparty Delegated Quantum Computing. *Cryptography,* 2017, vol. 1 (2), 12, https://arxiv.org/abs/1606.09200v2
- **FRÉDÉRIC DUPUIS ; JESPER BUUS NIELSEN ; LOUIS SAVAIL.** Actively Secure Two-Party Evaluation of any Quantum Opération. *Proceedings of the 32nd Annual Cryptology Conférence on Advances in Cryptology,* Août 2012, vol. 7417, https://doi.org/10.1007/978-3-642-32009-5 46